# FASCICULE DE BREVET EUROPEEN

(11) **EP 1 503 288 B1**
(45) Date de publication et mention de la délivrance du brevet: **29.03.2006**
(21) Numéro de dépôt: 04300438.1
(22) Date de dépôt: 09.07.2004
(51) Int. Cl.: G06F 11/00, G06F 11/07, G06F 1/00

(54) **Cellule de détection d'erreurs pour processeur intégré**
Fehlererkennungszelle für integrierte Prozessoren
Error detection cell for integrated processors

(30) Priorité: 09.07.2003 FR 0350312
(43) Date de publication de la demande: 02.02.2005
(73) Titulaire: ST MICROELECTRONICS S.A., 92120 Montrouge (FR)
(72) Inventeur: TEGLIA, Yannick, 13011, MARSEILLE (FR); LIARDET, Pierre-Yvan, 13790, PEYNIER (FR)
(74) Mandataire: de Beaumont, Michel

(56) Documents cités:
- EP-A- 0 318 021
- US-A- 4 233 682
- US-B1- 6 330 668

## Description

La présente invention concerne le domaine des processeurs intégrés exécutant un programme ou n'importe quelle manipulation de données en vue de fournir un résultat.

L'invention concerne plus particulièrement la détection d'une erreur (volontaire ou accidentelle) dans l'exécution du programme. De telles erreurs ou fautes peuvent provenir de l'arrivée d'un pic de courant temporaire sur l'alimentation du processeur pendant un court instant (connu sous son appellation anglo-saxonne "glitch"), d'une variation de la tension d'alimentation du processeur ou d'une tentative de déroutement du programme par tout autre moyen.

La détection d'une éventuelle injection de faute dans l'exécution d'un programme par un processeur intégré sert, par exemple, à détecter une éventuelle modification dans le séquencement de la série d'instructions du programme. Une telle modification peut participer à une attaque visant à découvrir des données secrètes manipulées par un algorithme du programme. Par exemple, dans un processus d'authentification, d'autorisation ou analogue, certains branchements sont critiques. Si le programme se trouve dérouté en le forçant à exécuter une ou plusieurs instructions, cela peut conduire à une violation de la procédure d'authentification.

Un premier exemple classique de système de détection de fautes consiste à effectuer un contrôle de l'exécution du programme en calculant une signature d'exécution et en vérifiant cette signature par rapport à une signature pré-enregistrée. Un inconvénient d'une telle technique est qu'elle n'est applicable que sur des données pré-établies, donc sur une partie du code lui-même et ne peut tenir compte des données traitées. Un autre inconvénient est que le contrôle ne peut être effectué qu'à posteriori, en fin d'exécution du programme.

Une deuxième technique connue consiste à exécuter un programme plus d'une fois (redondance), et à ne valider un résultat que si ces exécutions aboutissent à chaque fois au même résultat. Un inconvénient d'une telle technique est qu'elle demande des ressources matérielles et/ou logicielles importantes qui sont de plus fonction de la complexité du programme que l'on souhaite surveiller. De plus, les erreurs permanentes (forçage permanent d'un certain état) ne sont pas détectées.

Le document EP0318021 décrit un type de cellule de détection d'erreurs comprenant la comparaison de deux bascules bistables complémentaires. Celles-ci peuvent être affectées simultanément par une même perturbation.

L'invention vise à proposer une nouvelle solution pour détecter l'apparition d'une éventuelle erreur dans un traitement automatique par un processeur intégré qui pallie les inconvénients des solutions connues.

L'invention vise notamment à proposer une solution qui ne requiert que des ressources logicielles et matérielles limitées. En particulier, l'invention vise à proposer une solution dont les ressources requises par rapport à celles requises par le logiciel exécuté (surveillé) sont négligeables.

L'invention vise également à proposer une solution qui soit indépendante du programme exécuté par le processeur et qui soit donc compatible avec d'éventuelles évolutions de ce programme.

L'invention vise également à proposer une solution dite dynamique qui ne nécessite pas d'attendre la fin de l'exécution du programme pour détecter l'apparition d'une éventuelle erreur.

Pour atteindre ces objets et d'autres, la présente invention prévoit une cellule de détection d'une perturbation susceptible d'affecter le fonctionnement d'un processeur dans lequel elle est intégrée, comportant :
un élément de mémoire non volatile (22) de stockage d'au moins une valeur (NVM) pour vérifier un invariant ; et
des moyens pour recalculer périodiquement ladite valeur dans des éléments de mémoire volatile (23, 24, 25), de sorte à maintenir l'invariant en fonctionnement normal du processeur et à détecter une perte d'invariant consécutive à l'apparition d'une perturbation.

Selon un mode de réalisation de la présente invention, la perturbation agit au travers de l'alimentation de la cellule et du processeur.

Selon un mode de réalisation de la présente invention, la cellule comporte des moyens pour vérifier l'invariant en comparant ladite valeur stockée dans l'élément de mémoire non volatile à une valeur courante calculée périodiquement.

Selon un mode de réalisation de la présente invention, la cellule comprend deux premiers registres destinés à contenir deux données préchargées dont la somme est égale à ladite valeur stockée dans l'élément de mémoire non volatile, et un troisième registre destiné à contenir le résultat de la somme des deux premiers calculée périodiquement pour être comparée à la valeur stockée dans l'élément de mémoire non volatile, afin de vérifier l'invariant.

Selon un mode de réalisation de la présente invention, les données sont préchargées dans les premier et deuxième registres à chaque début d'exécution d'un programme à surveiller.

L'invention prévoit également un processeur intégré, comportant une ou plusieurs cellules de détection.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, de façon très schématique et sous forme de blocs, un processeur en circuit intégré selon la présente invention ;
la figure 2 représente, toujours de façon très schématique et sous forme de blocs, un mode de réalisation préféré d'une cellule de détection d'erreur selon la présente invention ; et
la figure 3 est un organigramme simplifié illustrant le fonctionnement de la cellule de la figure 2.

Les mêmes éléments ont été désignés par les mêmes références aux différentes figures. Pour des raisons de clarté, seuls les éléments et étapes nécessaires à la compréhension de l'invention ont été représentés aux figures et seront décrits par la suite. En particulier, les traitements opérés par le processeur en circuit intégré auquel est ajoutée une cellule propre à l'invention n'ont pas été détaillés, celle-ci s'appliquant quel que soit le type de processeur et les manipulations de données effectuées.

Une caractéristique de la présente invention est d'intégrer, avec un processeur dans lequel on souhaite détecter l'arrivée d'une perturbation susceptible d'affecter le fonctionnement de ce processeur, une cellule de maintien d'un invariant susceptible d'être affectée par le même type de perturbations. Selon l'invention, la cellule de maintien d'invariant effectue des traitements numériques, ce qui la rend sensible aux mêmes types de perturbations qui sont susceptibles d'affecter le déroulement d'un programme exécuté par le processeur.

Au sens de la présente invention, un invariant est une propriété qui reste vraie tout le long de l'exécution d'un programme quelconque par le circuit intégré, pourvu que les circuits de traitement ne soient pas perturbés, par exemple, par une variation de l'alimentation du processeur.

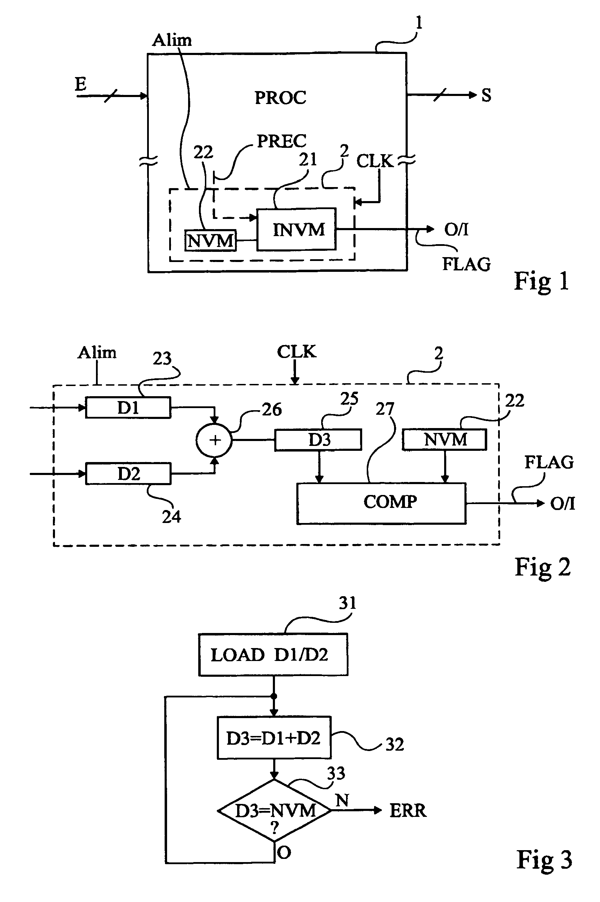

La figure 1 représente, de façon très schématique et sous forme de blocs, un processeur intégré 1 équipé d'une cellule 2 de détection de perturbations selon la présente invention. Le processeur 1 est représenté très schématiquement et, de façon classique, reçoit des données et commandes sur des entrées multiples E, fournit des données et commandes sur des sorties multiples S et est alimenté (ALIM).

Selon la présente invention, le processeur intégré comporte au moins une cellule 2 de maintien d'un invariant. Dans l'exemple illustré par la figure 1, la cellule 2 comporte un bloc 21 de maintien d'invariant qu'elle compare avec une donnée NVM stockée dans une mémoire non volatile 22 afin de fournir un ou plusieurs bits indicateurs par leurs états d'une perte ou non de l'invariant. Dans l'exemple représenté, on considère le cas d'un seul bit drapeau (FLAG). Selon la réalisation de la cellule 2, celle-ci peut recevoir des données préchargées PREC provenant de l'extérieur de la cellule. Ce préchargement reste toutefois selon l'invention limité au début de l'exécution du programme que l'on souhaite surveiller. Par la suite, la cellule 2 a un fonctionnement entièrement autonome par rapport au reste du processeur intégré dont elle ne reçoit que l'alimentation et, le cas échéant, un signal d'horloge CLK. Ainsi, la cellule 2 n'est jamais soumise à des données d'entrée ou de sortie traitées par le processeur à l'exception de l'éventuel préchargement.

Une autre caractéristique de la présente invention est que la cellule 2 utilise des ressources de même nature que celles exploitées par le processeur, afin d'être sensible aux mêmes types de perturbations. Plus précisément, la cellule 2 comporte des circuits de traitement numériques (par exemple, des registres, des opérateurs, etc.).

La figure 2 représente, de façon très schématique et sous forme de blocs, un mode de réalisation préféré d'une cellule 2 de détection de perturbation selon la présente invention.

Cette cellule 2 comporte trois registres 23, 24, et 25, un additionneur 26, un comparateur 27 et un élément 22 de mémoire non volatile. L'élément 22 est indifféremment un élément de mémoire morte ROM, une donnée câblée en dur lors de la fabrication du circuit ou tout autre système équivalent. L'important est que la donnée NVM que contient l'élément 22 ne soit pas susceptible d'être modifiée en particulier par l'apparition d'une perturbation qu'est censée détecter la cellule 2, donc que l'élément 22 soit notamment insensible à des perturbations de l'alimentation ALIM du processeur intégré.

La figure 3 illustre, sous forme d'organigramme simplifié, le fonctionnement de la cellule de la figure 2.

Les registres 23 et 24 sont destinés à être préchargés, par exemple lors de la mise sous tension du processeur 1 ou lors du début d'exécution d'un programme à surveiller, par des données D1 et D2 dont la somme D3 est en principe identique à la valeur NVM.

Une fois que les données D1 et D2 ont été préchargées (bloc 31, LOAD D1/D2) dans les registres 23 et 24, plus aucune entrée de données n'est permise dans la cellule 2 pour le reste de l'exécution du programme à surveiller.

Périodiquement, par exemple à chaque cycle du programme exécuté, les contenus des registres 23 et 24 sont additionnés par le sommateur 26 de façon à obtenir un résultat D3 stocké dans le registre 25 (bloc 32, D3=D1+D2).

Les contenus du registre 25 et de l'élément 22 sont alors comparés (bloc 33, D3=NVM ?). Le résultat de cette comparaison fournit, par exemple, un bit de drapeau (FLAG) à l'état 0 ou 1 indicateur de la détection d'une erreur éventuelle.

Si le bit FLAG fournit un résultat correspondant à l'identité des données D3 et NVM, la séquence est reproduite au cycle suivant, à l'exception bien entendu du chargement des données D1 et D2. Dans le cas contraire, le changement d'état du drapeau génère un traitement d'erreur ERR dans la mesure où la cellule a détecté une perturbation.

On notera que l'invention ne vise pas à empêcher l'apparition d'une erreur mais simplement à la détecter. Le traitement à effectuer lorsqu'une erreur apparaît dépend de l'application et pourra correspondre à n'importe quel traitement d'erreur classique.

Dans le mode de réalisation des figures 2 et 3, l'invariant est l'égalité entre la donnée D3 et la donnée NVM.

Le choix de la périodicité de vérification de l'invariant dépend de l'application. Plus la période est réduite, plus la cellule de détection réagira rapidement à l'arrivée d'une perturbation l'empêchant de maintenir l'invariant.

Un avantage de la présente invention est qu'elle permet de détecter l'apparition d'une perturbation susceptible de modifier l'exécution d'un programme en temps réel, c'est-à-dire sans attendre la fin de l'exécution de ce programme.

Un autre avantage de l'invention est que sa mise en oeuvre est particulièrement simple et peu gourmande en ressources, notamment par rapport à l'exécution d'un calcul redondant.

Selon un autre mode de réalisation, on pourra utiliser un tri à bulles d'une table de données stockée dans un registre ou en mémoire vive associée au processeur, que l'on compare périodiquement à un ensemble de tables identiques stockées dans une mémoire non volatile. En cas d'apparition d'une perturbation, le tri de la table se trouve perturbé, ce qui permet une détection. L'invariant est ici le fait que la table de données en mémoire vive est triée jusqu'au rang n (et correspond à une des tables de la mémoire non volatile) lors de la nième itération de l'algorithme.

On notera que plusieurs cellules de détection pourront être réparties à différents endroits du processeur intégré pour rendre la détection plus robuste.

Selon un autre mode de réalisation, la cellule de détection comprend un réseau de registres disséminé au sein du circuit qui sont rafraîchis à chaque coup d'horloge et dont on vérifie le caractère invariant par rapport à une donnée de référence stockée dans un élément non volatil.

Bien entendu, la présente invention est susceptible de diverses variantes et modifications qui apparaîtront à l'homme de l'art. En particulier, la mise en oeuvre pratique de l'invention à partir des indications fonctionnelles données ci-dessus est à la portée de l'homme du métier. De plus, bien que la vérification de l'invariant ait été décrite par recours à un comparateur matériel, on notera que l'invention peut également être mise en oeuvre avec une comparaison logicielle, l'important étant que la cellule maintienne un élément invariant utilisant la même technologie que le processeur avec lequel est intégré la cellule, de façon à être sensible au même type de perturbation. Dans ce cas, on veillera à placer l'indicateur de détection dans l'état d'erreur avant de vérifier l'invariant.

## Revendications

1. Cellule (2) de détection d'une perturbation susceptible d'affecter le fonctionnement d'un processeur (1) dans lequel elle est intégrée, **caractérisée en ce qu'**elle comporte :
un élément de mémoire non volatile (22) de stockage d'au moins une valeur (NVM) pour vérifier un invariant ; et
des moyens pour recalculer périodiquement ladite valeur dans des éléments de mémoire volatile (23, 24, 25), de sorte à maintenir l'invariant en fonctionnement normal du processeur et à détecter une perte d'invariant consécutive à l'apparition d'une perturbation.

2. Cellule selon la revendication 1, dans laquelle la perturbation agit au travers de l'alimentation de la cellule (2) et du processeur (1).

3. Cellule selon la revendication 1, dans laquelle la cellule (2) comporte des moyens (27) pour vérifier l'invariant en comparant ladite valeur (NVM) stockée dans l'élément de mémoire non volatile (22) à une valeur courante (D3) calculée périodiquement.

4. Cellule selon la revendication 1, comprenant deux premiers registres (23, 24) destinés à contenir deux données (D1, D2) préchargées dont la somme est égale à ladite valeur stockée dans l'élément de mémoire non volatile (22), et un troisième registre (25) destiné à contenir le résultat (D3) de la somme des deux premiers calculée périodiquement pour être comparée à la valeur stockée dans l'élément de mémoire non volatile, afin de vérifier l'invariant.

5. Cellule selon la revendication 4, dans laquelle les données (D1, D2) sont préchargées dans les premier et deuxième registres (23, 24) à chaque début d'exécution d'un programme à surveiller.

6. Processeur intégré, **caractérisé en ce qu'**il comporte au moins une cellule (2) de détection conforme à l'une quelconque des revendications 1 à 5.

## Patentansprüche

1. Zelle (2) zur Detektion einer Störung, welche die Arbeits-und Betriebsweise eines Prozessors (1), in welchem die Zelle integriert ist, beeinflußen kann, **dadurch gekennzeichnet, daß** die Zelle umfasst:
ein nicht-flüchtiges Speicherelement (22) zum Speichern wenigstens eines Werts (NVM) für die Überprüfung bzw. Kontrolle einer Invarianten; sowie
Mittel zur periodischen Neu- bzw. Wiederberechnung des genannten Werts in fluchtigen Speicherelementen (23, 24, 25), derart dass im normalen Arbeits-bzw. Betriebszustand des Prozessors die Invariante erhalten bleibt, und ein Verlust der Invarianten nach dem Auftreten einer Störung detektiert wird.

2. Zelle nach Anspruch 1, bei welcher die Störung durch die Stromversorgung der Zelle (2) und des Prozessors (1) einwirkt.

3. nach Anspruch 1, bei welcher die Zelle (2) Mittel (27) zum Uberprüfen der Invarianten durch Vergleichen, des in dem nicht-fluchtigen Speicherelement (22) gespeicherten Werts (NVM) mit einem periodisch berechneten laufenden Wert (D3) aufweist.

4. Zelle nach Anspruch 1, welche zwei erste Register (23, 24) zur Aufnahme zweier vorgeladener Daten (D1, D2), deren Summe gleich dem in dem nicht flüchtigen Speicherelement (22) gespeicherten Wert ist, und ein drittes Register (25) zur Aufnahme des Ergebnisses (D3) der Addition der beiden ersten Register aufweist, die periodisch zum Vergleich mit dem in dem nicht-flüchtigen Speicherelement gespeicherten Wert berechnet wird, für die Überprüfung der Invarianten.

5. Zelle nach Anspruch 4, bei welcher die Daten (D1, D2) jeweils zu Beginn der Ausführung eines zu überwachenden Programms in das erste und das zweite Register (23, 24) vorgeladen werden.

6. Integrierter Prozessor, welcher wenigstens eine Detektionszelle (2) gemäß einem der Ansprüche 1 bis 5 umfässt.

## Claims

1. An integrated cell (2) for detecting a disturbance capable of affecting the operation of a processor (1), comprising non-volatile storage means (22) for storing at least one value (NVM) for the verification of an invariant; and
means for periodically recalculating said value in volatile memory elements (23, 24, 25), for holding an invariant in normal operation of the processor and for detecting an invariant loss consecutive to the occurrence of a disturbance.

2. The cell of claim 1, wherein the disturbance acts through the power supply of the cell (2) and of the processor (1) .

3. The cell of claim 1, wherein the cell (2) comprises means (27) for checking the invariant by comparing said value (NVM) stored in the non-volatile memory element (22) with a periodically-calculated current value (D3).

4. The cell of claim 1, comprising two first registers (23, 24) intended to contain two preloaded data (D1, D2) having a sum equal to said value stored in the non-volatile memory element (22), and a third register (25) intended to contain the result (D3) of the sum of the first two, periodically calculated to be compared to the value stored in the non-volatile memory element, to check the invariant.

5. The cell of claim 4, wherein the data (D1, D2) are preloaded into the first and second registers (23, 24) at each beginning of the execution of a program to be monitored.

6. An integrated processor, comprising at least one detection cell (2) of any of claims 1 to 5.
